# EUROPEAN PATENT APPLICATION

(11) **EP 4 591 986 A1**
(43) Date of publication of application: **30.07.2025**
(21) Application number: 24153773.7
(22) Date of filing: 24.01.2024
(51) Int. Cl.: B02C 13/14, A23G 1/10, A23G 3/02, B02C 13/16, B02C 13/18, B02C 13/282, B02C 13/30, B02C 18/06, B02C 18/08, B02C 18/12, B02C 18/18, B02C 19/00, B02C 23/08, B02C 23/24, B02C 23/34

(54) **BEATER MILL FOR GRINDING PARTICULATE MATTER**

(71) Applicant: Royal Duyvis Wiener B.V., 1541 KD Koog aan de Zaan (NL)
(72) Inventor: Hofman, Dennis, 1541 KD Koog aan de Zaan (NL)
(74) Representative: De Vries & Metman

(57) **Abstract**

The invention relates to a beater mill, in particular a pre-grinding beater mill (1), for grinding particulate matter, such as cocoa nibs and/or nut kernels, preferably to a paste and/or a liquid, the mill (1) comprising a grinding chamber (2) having an at least substantially cylindrical, curved and/or conical wall comprising a sieve (3), a beater (5) comprising a shaft (6) carrying grinding elements (7) for grinding the particulate matter, and a permanent magnet motor (10) for rotatably driving the beater (5).

## Description

The present invention relates to a beater mill, in particular a pre-grinding beater mill, for (pre-)grinding particulate matter, such as cocoa nibs and/or nut kernels, preferably to a paste and/or a liquid, the mill comprising a grinding chamber having an at least substantially cylindrical, curved and/or conical wall comprising a sieve, a beater comprising a shaft, typically a central shaft, i.e. a shaft in the center of the chamber, directly or indirectly carrying grinding elements, such as arms, hammers, and/or blades, for (pre-)grinding the particulate matter, and a motor for rotatably driving the beater.

GB 1 556 425 relates to a grinding machine that is intended for solids, such as roasted and rough-crushed cacao beans, which form a pasty or viscous substance during comminution owing to the release of an included lipoid component. The machine contains fly cutters which are located inside a grinding chamber bounded by a screening cylinder, rotate at a speed of the order of 3000 rpm and are fixedly mounted on a hub which is installed on the drive motor shaft. The screening cylinder comprises a perforated inside screen which corresponds to the grain size of the ground material and an outer screen which is provided with perforations approximately 10 mm in diameter, the two screens being rigidly connected to one another in the region of end flanges. To cool the material to be ground, the floor has two layers and is designed so as to contain a liquid circulation chamber, and the lid in the upper part of the machine includes gas inlet nozzles which are intended to encourage agitation of the material to be ground as well as providing additional cooling of the latter.

A similar beater blade mill is commercially available under the name Nibrotom^{™}, which is designed especially for the pre-grinding of cocoa nibs, nuts, almonds and other seeds with a high fat/oil content. E.g. cocoa nibs are fed from the top into the grinding chamber by a dosing screw, where knives immediately start the grinding process. These knives are made from specially hardened steel that significantly reduces wear. The pre-ground material (liquor, paste) leaves the machine through a slotted sieve and by selecting the appropriate sieve size, fineness can be adjusted as required. Optimum quality is ensured and maximum capacity is achieved.

It is an object of the present invention to provide a beater mill that is more compact and/or that requires less servicing.

To this end, the motor is a permanent magnet motor. In an embodiment, the rotational axis of the rotor of the motor and the rotational axis of the beater are aligned, e.g. coincide, and e.g. the beater is fixedly attached to and/or forms an extension of the rotor.

Permanent magnet motors were found to enable efficient operation and a compact and more straight-forward design of beater mills, in particular if the motor directly drives the beater, i.e. without a transmission, such as an angled transmission or a reduction, in turn facilitating maintenance, as will be explained in more detail below.

In an embodiment, the shaft is rotatably supported by the motor bearings. It is preferred that the bearings with which the rotor is rotatably supported in the stator of the motor also provide the rotatable support for the shaft of the beater of the mill. Thus, the number of bearings is reduced and less servicing is required.

In an embodiment, the rotor of the motor is hollow and the shaft extends into the rotor of the motor, further increasing the compactness of the design.

In an embodiment, the beater mill comprises a controller to control, e.g. by sinusoidal signal and/or frequency in a manner known in itself, the rotational speed of the motor, preferably to within a range of 1000 to 2000 revolutions per minute (rpm), preferably to within a range of 1200 to 1800 rpm, preferably resulting in a circumferential speed of the grinding elements to within a range of 50 to 150 meters per second (m/s), preferably to within a range of 70 to 120 m/s, more preferably to within a range of 90 to 100 m/s.

In an embodiment, the motor is a is a permanent magnet synchronous motor and/or a liquid-cooled, in particular water-cooled, motor and/or has the permanent magnets on the rotor and/or has a rated power of at least 100 kiloWatt (kW) and/or a torque of at least 300 Newtonmeter (Nm).

In an embodiment, the chamber and/or the shaft are co-axial and/or extend vertically.

In such configurations, it is preferred that the mill comprises an inlet opening in the upper part, e.g. the top of the grinding chamber and e.g. a transport screw to supply the particulate matter to the chamber. The matter falling into the chamber will be hit by the grinding elements, such as blades, which will cause the matter to fracture. If the matter that is ground has a high fat or oil content, such as cocoa nibs containing approximately 50 % of fat, stored inside the plant cells, as soon as the cells are broken by the grinding action, the fat can run freely and form a liquid or paste together with the solids. The solid particles that are smaller than the openings in the sieve will flow, together with the fat or oil, to a ring shaped collecting tray that lays just outside the sieve. This tray is preferably connected to a collecting pipe, in turn connected to a pump, so the mass of solid particles and liquid can be pumped to a collecting vessel. The mechanical energy from the grinding blades will convert into heat, so the temperature of the product will rise. Usually the temperature rises above the boiling point of water so the moisture inside the product will partially evaporate during grinding. The mill preferably has a griding capacity of at least 3.500 kg/h.

In an embodiment, the motor is positioned below the chamber and/or has a width smaller than 550 mm, preferably in in a range from 250 to 450 mm and/or a height smaller than 1000 mm, preferably in a range from 500 to 1050 mm.

In an embodiment, the motor, e.g. the stator or the housing of the motor, is secured to the bottom of the chamber or to a frame supporting the chamber. In a refinement, the weight of the motor is carried (borne) by the bottom of the chamber or the frame.

In an embodiment, the grinding elements are attached to the shaft via a spline, in particular by a parallel key spline. Such a spline was found to be more robust in withstanding the extreme and varying load on the grinding elements, e.g. resulting from the particulate matter building up on the sieve an subsequently breaking up and falling on the grinding elements. In an embodiment, the spline allows limited axial play of the beater on the shaft.

In an embodiment, the chamber comprises an inner wall and an additional (outer)wall, to provide a cooling jacket.

The present beater mill allows configurations that require less servicing, smaller footprint, and robust operation.

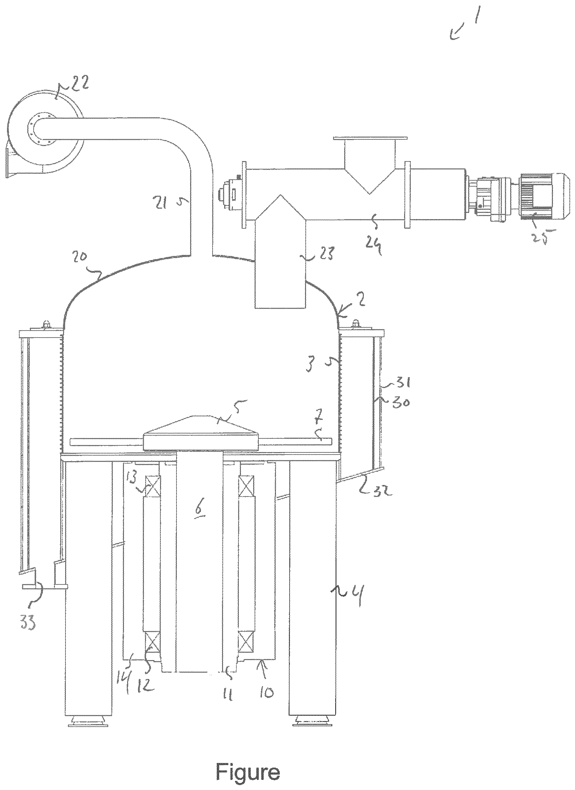

The invention will now be explained in more detail with reference to the Figure, which schematically shows a cross-section of a beater mill according to the invention.

The Figure is not necessarily to scale and details that are not required for understanding the present invention may have been omitted. Terms such as "up", "down", "above", "below", relate to the embodiment as oriented in the Figure. Further, elements that are at least substantially identical or that perform an at least substantially identical function are denoted by the same numeral.

The Figure shows a beater mill 1 that is suitable for pre-grinding particulate matter, such as cocoa nibs and/or nut kernels. The mill 1 comprises a grinding chamber 2 having a round, cylindrical, formed by a slotted sieve 3, with slots having a width in a range from 0,15 to 0,5 mm and an inner diameter 120 cm. The chamber is supported by a frame 4 and accommodates a rotatable beater 5 comprising a shaft 6 aligned with the (imaginary) centerline of the chamber and carrying grinding elements, e.g. four arms 7, for (pre-)grinding the particulate matter.

A permanent magnet synchronous motor 10, in this example an Oswald^{™} MFS20.35-8WI, is secured to the bottom of the chamber or to a frame supporting the chamber. The beater 5 is fixedly attached, e.g. by means of a parallel key spline, to the central shaft 6, which in turn is accommodated inside and attached to the rotor 11 of the motor, such that the rotational axis of the rotor and the rotational axis of the central shaft 6 of the beater coincide, providing direct drive of the beater by the motor. Thus, the bearings 12, 13 with which the rotor 11 is rotatably supported in the stator 14 of the motor also provide the rotatable support for the shaft of the beater of the mill.

The motor 10 comprises a controller (not shown) to control, e.g. by sinusoidal signal and/or frequency in a manner known in itself, the rotational speed of the beater, such the tips of the beater arms have a circumferential speed in a range from 90 to 100 m/s.

The top of the grinding chamber comprises a cover 20, in turn provided with an outlet duct 21 connected to a blower 22 or fan to remove gas, in particular moist air, from the chamber, and with an inlet duct 23 connected to a supply duct 24 containing a transport screw and an electric induction motor 25 to supply the particulate matter to the chamber 2. Further, the chamber 2 is surrounded by an annular cooling jacket with inner and outer walls 30, 31, and an inclined and annular collecting tray 32 that provides a bottom of the space defined by the sieve 3 and the inner wall 30. At its lower side, the collecting tray is provide with an outlet for ground particulate, flowable matter.

During operation, in an example, cocoa nibs are fed via the supply duct 24 to the chamber 2 at a mass flow rate of 4.000 kg/h. The beater 5, operated via the controller at a circumferential speed of approximately 95 m/s. The nibs falling into the chamber 2 will be hit by the grinding elements 7 which will cause the nibs to fracture and also break the cells in the nibs. This frees the fat contained in the nibs, thus forming a liquid or paste of solid particles in liquid fat. The liquid fat and the solid particles that are smaller than the openings in the sieve 3 will flow to the collecting tray 32 and are pumped to a collecting vessel, to await further grinding / refining. The heat generated by the pre-grinding causes part of water in the nibs to evaporate, which vapor is removed by means of the blower 22.

The invention is not limited to the embodiment as described above, which can be varied in several ways within the scope of the claims. E.g., the beater mill according to the present invention is also suitable for refining e.g. nut kernels and other particulate matters, in particular other matters containing at least 30 wt% of fat.

## Claims

1. Beater mill, in particular a pre-grinding beater mill (1), for (pre-)grinding particulate matter, such as cocoa nibs and/or nut kernels, preferably to a paste and/or a liquid, the mill (1) comprising a grinding chamber (2) having an at least substantially cylindrical, curved and/or conical wall comprising a sieve (3), a beater (5) comprising a shaft (6) carrying grinding elements (7) for grinding the particulate matter, and a motor for rotatably driving the beater (5), **characterized in that** the motor is a permanent magnet motor (10).

2. Beater mill (1) according to claim 1, wherein the motor (10) directly drives the shaft (6) of the beater (5) .

3. Beater mill (1) according to claim 1 or 2, wherein the rotational axis of the rotor (11) of the motor and the rotational axis of the central shaft (6) of the beater (5) are aligned.

4. Beater mill (1) according to any one of the preceding claims, wherein the shaft (6) is fixedly attached to the rotor (11) of the motor (10).

5. Beater mill (1) according to any one of the preceding claims, wherein the shaft (6) is rotatably supported by the motor bearings (12, 13).

6. Beater mill (1) according to any one of the preceding claims, wherein the rotor (11) of the motor (10) is hollow and the shaft (6) extends into the rotor (11) of the motor (10).

7. Beater mill (1) according to any one of the preceding claims, comprising a controller to control the rotational speed of the motor (10) to within a range of 1000 to 2000 revolutions per minute (rpm), preferably to within a range of 1200 to 1800 rpm, preferably resulting in a circumferential speed of the grinding elements (7) to within a range of 50 to 150 meters per second (m/s), preferably to within a range of 70 to 120 m/s.

8. Beater mill (1) according to any one of the preceding claims, wherein the motor (10) is a permanent magnet synchronous motor and/or a liquid-cooled motor and/or has the permanent magnets on the rotor and/or has a rated power of at least 100 kiloWatt (kW) and/or a torque of at least 300 Newtonmeter (Nm).

9. Beater mill (1) according to any one of the preceding claims, wherein the chamber (2) and/or the shaft (6) are co-axial and/or extend vertically.

10. Beater mill (1) according to any one of the preceding claims, wherein the motor (10) is positioned below the chamber (2).

11. Beater mill (1) according to any one of the preceding claims, wherein the motor has a width smaller than 550 mm, preferably in in a range from 250 to 450 mm and/or a height smaller than 1000 mm, preferably in a range from 500 to 1050 mm.

12. Beater mill (1) according to any one of the preceding claims, wherein the motor (10) is secured to the bottom of the chamber (2) or to a frame (4) supporting the chamber (2).

13. Beater mill (1) according to claim 12, wherein the weight of the motor (10) is carried by the bottom of the chamber (2) and/or the frame (4).

14. Beater mill (1) according to any one of the preceding claims, wherein grinding elements (7) are attached to the shaft (6) via a spline, in particular by a parallel key spline.

15. Beater mill (1) according to any one of the preceding claims, wherein the chamber (2) comprises an inner wall (30) and an additional wall (31).
